# EUROPÄISCHE PATENTSCHRIFT

(11) **EP 3 741 731 B1**
(45) Veröffentlichungstag und Bekanntmachung des Hinweises auf die Patenterteilung: **24.12.2025**
(21) Anmeldenummer: 20174405.9
(22) Anmeldetag: 13.05.2020
(51) Int. Cl.: C03B 33/02, C03B 33/09, C03B 33/06, B23K 26/0622, B23K 26/14, B23K 26/146, B23K 26/53, B23K 103/00

(54) **VERFAHREN UND VORRICHTUNG ZUR VERARBEITUNG VON GLASELEMENTEN**
METHOD AND DEVICE FOR PROCESSING GLASS ELEMENTS
PROCÉDÉ ET DISPOSITIF DE TRAITEMENT DES ÉLÉMENTS EN VERRE

(30) Priorität: 22.05.2019 DE 102019113635
(43) Veröffentlichungstag der Anmeldung: 25.11.2020
(73) Patentinhaber: SCHOTT AG, 55122 Mainz (DE)
(72) Erfinder: ORTNER, Andreas, 55435 Gau-Algesheim (DE); TRINKS, Dr. Ulla, 95666 Mitterteich (DE); WAGNER, Fabian, 55118 Mainz (DE); ETZ, Carsten, 55218 Ingelheim (DE); SEILER, Daniela, 67596 Dittelsheim-Heßloch (DE); KLUGE, Michael, 63073 Offenbach am Main (DE); CZEPELKA, Peter, 55246 Mainz-Kostheim (DE); LENTES, Dr. Frank-Thomas, 55411 Bingen (DE); WITZMANN, Dr. André, 95679 Waldershof (DE); ARTMANN, Reiner, 95666 Mitterteich (DE)
(74) Vertreter: Blumbach · Zinngrebe Patentanwälte PartG mbB

(56) Entgegenhaltungen:
- US-A1- 2015 165 560
- US-A1- 2016 009 586
- US-A1- 2018 057 390

## Beschreibung

Die Erfindung betrifft allgemein das Verarbeiten von Glas durch Auftrennen des Glases entlang einer gewünschten Trennlinie. Insbesondere betrifft die Erfindung ein lasergestütztes Verfahren zum Einbringen von Trennlinien.

Um Glasscheiben entlang einer vorgesehenen Linie zu trennen, wird vielfach das Verfahren des Ritzbrechens angewandt. Dabei wird das Glas erst entlang einer Linie angeritzt und dann durch Ausüben einer Biegespannung an der Linie gebrochen. Hierbei besteht allerdings das Problem, dass besonders bei dickeren Gläsern die durch Aufbrechen an der Linie entstehende Kantenfläche verlaufen kann und dann nicht mehr senkrecht auf den Seitenflächen steht.

Die US 2016/009586 A1 offenbart ein Verfahren, bei dem ein gepulster Laser mit einer Strahlbrennlinienlänge zwischen 0,1 mm und 100 mm mindestens eine Perforationslinie in einem Glasartikel induziert und eine Glastrennstation stromabwärts der Glasschneidstation so konfiguriert ist, dass sie, insbesondere nach einem Erhitzen und Abkühlen, einen Teil des Glasartikels über die Perforationslinie entfernt, um einen lasergeschnittenen Glasartikel herzustellen.

Die US 2018/057390 A1 beschreibt ein Verfahren zur Laserbearbeitung von Glaswerkstücken, das das Fokussieren eines gepulsten Laserstrahls in eine Laserstrahl-Brennlinie umfasst, die entlang der Strahlausbreitungsrichtung ausgerichtet und in das Glas gerichtet ist, wobei die Laserstrahllinie eine induzierte Absorption innerhalb des Materials erzeugt und die induzierte Absorption eine Defektlinie bei einer Temperatur oberhalb des Glühens des bzw. Tempern Glases entlang der Laserstrahllinie innerhalb des Glases erzeugt.

Aus der WO 2015/095088 A1 ist ein Verfahren zum Laserschneiden von Displayglas bekannt. Bei diesem Verfahren wird nach einem Overflow-Fusion-Formungsprozess eines Glasbands die Borte des Glasbands abgetrennt, das Glasband abgelängt und dann ein Zuschnitt auf die gewünschten Formate vorgenommen, um eine gewünschte Sollkontur und Größe von Glasscheiben zu erhalten. Das Schneiden kann mit einem Ultrakurzpulslaser erfolgen. Entsprechendes beschreibt auch die WO 2015/095091 A1.

Das Verfahren nach der US 2015/165560 A1 beinhaltet die Verwendung eines Ultrakurzpulslasers zur Bildung von Perforationen oder Löchern in dünnen Substraten aus transparenten Materialien gefolgt von einem CO₂-Laserstrahl zur Förderung der vollständigen Trennung um die Perforationslinie herum. Zusätzlich kann ein mit hoher Geschwindigkeit arbeitendes Hilfsgas durch eine den CO₂-Laser umgebende Düse geblasen werden, das hilft, das gelöste Glasmaterial aus dem größeren Substrat herauszudrücken.

Die US9975799 und WO 2016/007843 beschreiben unter anderem das Heraustrennen eines aus einem Glasband durch Blasformen geformten Fläschchens (sog. String-ribbon-Prozess) durch Filamentieren entlang des Flaschenhalses und anschließendem Heraustrennen des Fläschchens entlang der Filamentationslinie durch Einbringen mechanischer oder thermischer Spannungen, insbesondere durch einen CO₂-Laser. Der Trennvorgang geschieht kurz nach dem Heissformgebungsprozess.

Den oben genannten Schriften ist gemeinsam, dass ein ultrakurzpuls-Laserprozess im Anschluss an den Heissformgebungsprozess vorgenommen wird, wobei eine deutliche zeitliche Trennung zwischen Bruchvorbereitung im heißen Zustand und Trennung des Substrates im kalten Zustand nicht vorgesehen ist.

Da es sich beim Filamentieren um einen thermisch basierten Prozess handelt, ist dieser nicht nur von den Materialeigenschaften wie dem thermischen Ausdehnungskoeffizient abhängig, sondern auch von der Temperatur des Werkstücks während der Bearbeitung. So wurde festgestellt, dass es beim Filamentieren von sprödbrechenden Material beim Raumtemperatur und demselben Material bei hohen Temperaturen deutliche Unterschiede gibt: Da mit steigender Werkstücktemperatur die durch den Filamentationsprozess erzeugte lokale Temperaturdifferenz ΔT absinkt, werden bei hohen Werkstücktemperaturen deutlich geringere Spannungen im Bereich der Filamentierung erzeugt als bei niedrigeren Substrattemperaturen. Entsprechend geringer ist bei hohen Temperaturen dann auch der Schädigungsgrad im Material. Dieser Unterschied im Schädigungsgrad rund um die erzeugten Filamente zeigt sich durch deutlich höhere Bruchkräfte (bei Filamentierung bei hohen Werkstücktemperaturen), welche zusätzlich auch eine deutlich höhere Streuung aufweisen.

Es wurde also überraschenderweise festgestellt, dass mit steigender Bearbeitungstemperatur während des Filamentierungsprozesses die zum Öffnen der Filamentierungslinie notwendigen Bruchkräfte und ihre Streuung ansteigen. Dieser Effekt setzt sich bis hin zur Transformationstemperatur des Glases fort, bei deren Erreichen die Spaltbarkeit der erzeugten Materialschädigungen dramatisch absinkt. Dieser Effekt ist von erheblicher Bedeutung für die Anwendung des Filamentierungsverfahrens im Inline-Prozess, insbesondere bei hohen Temperaturen in der Nähe oder im Heissformgebungsbereich.

Der Erfindung liegt mithin die Aufgabe zugrunde, das Auftrennen von Glaselementen im Anschluss eines Heißprozesses, wie insbesondere einer Heißformung, zu erleichtern und zuverlässiger zu machen. Diese Aufgabe wird durch den Gegenstand der unabhängigen Ansprüche gelöst. Vorteilhafte Ausgestaltungen der Erfindung sind in den jeweiligen abhängigen Ansprüchen angegeben.

Dem Effekt der Abnahme der Spaltbarkeit an der Trennlinie bei hoher Temperatur kann entgegengewirkt werden, indem die Anzahl der Pulse in einem Burst und/oder die Burst-Frequenz erhöht wird, wodurch stärkere Schädigungen und - damit verbunden - niedrigere Bruchkräfte erzeugt werden. Der Erfindung liegt aber die Erkenntnis zugrunde, dass die Bruchkraft und ihre Streuung deutlich reduziert werden können, wenn eine schnelle Abkühlung im Bereich der vom Laser eingefügten Schädigungen durchgeführt wird. Der Effekt der Absenkung der Bruchkraft und ihrer Streuung durch eine unmittelbar im Anschluß an den Filamentierungsprozess nachgelagerte Zwangskühlung im Bereich des modifizierten Materials ist umso deutlicher, je höher die Kühlrate ist: Umso höher die Kühlrate, umso höher ist auch die Reduzierung der Bruchkraft.

Demgemäß sieht die Erfindung ein Verfahren zur Verarbeitung von Glaselementen vor, bei welchem in ein Glaselement während oder nach einem Heißverarbeitungsprozess bei einer erhöhten Temperatur von mindestens 100°C, bevorzugt mindestens 200°C, besonders bevorzugt mindestens 300°C eine Perforationslinie zum Auftrennen des Glaselements eingefügt wird, indem entlang des vorbestimmten Verlaufs der Perforationslinie mit einem gepulsten Laserstrahl eines Ultrakurzpulslasers voneinander beabstandet filamentförmige Schädigungen in das Glaselement eingefügt werden, und wobei während dem Einfügen der filamentförmigen Schädigungen das Glaselement mit einem Kühlfluid so abgekühlt wird, dass ein Temperaturgradient entsteht, welcher an den filamentförmigen Schädigungen eine mechanische Spannung induziert, wodurch die zum Auftrennen des Glaselements entlang der Perforationslinie erforderliche Bruchkraft reduziert wird.

Eine entsprechende Vorrichtung zur Verarbeitung von Glaselementen umfasst
- eine Vorrichtung zur Heißverarbeitung der Glaselemente, sowie
- eine Einrichtung zum Einfügen einer Perforationslinie in das Glaselement, um das Glaselement entlang der Perforationslinie aufzutrennen, wobei die Einrichtung zum Einfügen einer Perforationslinie
- einen Ultrakurzpulslaser, welcher so angeordnet und ausgerichtet ist, dass dieser in einem Bereich der Vorrichtung zur Verarbeitung von Glaselementen auf ein Glaselement einstrahlt, in welchem das Glaselement vor der Erwärmung bei der Bearbeitung in der Vorrichtung zur Heißverarbeitung der Glaselemente noch eine Temperatur von mindestens 100 °C aufweist, und wobei das Glaselement aus der Bearbeitung in der Vorrichtung zur Heißverarbeitung der Glaselemente noch eine Temperatur von mindestens 100 °C aufweist, und wobei
- eine Bewegungseinrichtung vorgesehen ist, um den Auftreffpunkt des Laserstrahls entlang eines vorgesehenen Verlaufs der Perforationslinie zu bewegen,

wobei der Ultrakurzpulslaser eingerichtet ist, filamentförmige Schädigungen in das Glaselement einzufügen,
und wobei die Vorrichtung zur Verarbeitung von Glaselementen
   - eine Kühleinrichtung umfasst, wobei die Kühleinrichtung eine Düse zur Abgabe eines Kühlfluid-Strahls oder eine Einrichtung zum Abschrecken des Glaselements in einer Flüssigkeit umfasst, welche so angeordnet und ausgebildet ist, dass diese das Glaselement während dem Einfügen der filamentförmigen Schädigungen das Glaselement so abkühlt, dass ein Temperaturgradient entsteht, welcher an den filamentförmigen Schädigungen eine mechanische Spannung induziert, so dass die zum Auftrennen des Glaselements entlang der Trennlinie erforderliche Bruchkraft, sowie typischerweise auch deren Streuung, reduziert wird. Hierbei werden Bruchkraft und Streuung gegenüber der Filamentierung im Heißen reduziert, durch geeignete Kühlung kann sogar eine Reduzierung gegenüber der Filamentierung bei Raumtemperatur erreicht werden. Mit der Erfindung wird also neben einer Erniedrigung der Bruchkraft auch die für den Bruch sprödbrüchiger Materialien typische statistische Verteilung verschmälert. Dies ist sehr vorteilhaft, um die Zuverlässigkeit beim Auftrennen des Glaselements zu erhöhen, beziehungsweise die Wahrscheinlichkeit eines unkontrollierten Bruchs zu reduzieren.

Die erhöhte Temperatur, bei der das Einfügen der Perforationslinie erfolgt, kann nicht nur wie oben beschrieben als absolute Temperatur ausgewählt werden. Gemäß einer Ausführungsform der Erfindung erfolgt die Auswahl der Temperatur des Glases anhand des Intervalls zwischen Raumtemperatur und Glasübergangstemperatur. Gemäß einer Weiterbildung ist dazu vorgesehen, dass in das Glaselement während oder nach einem Heißverarbeitungsprozess bei einer erhöhten Temperatur eine Perforationslinie zum Auftrennen des Glaselements eingefügt wird, wobei die Temperatur gegenüber einer Raumtemperatur von 20°C mindestens um den halben Temperaturabstand von Raumtemperatur bis zur Glasübergangstemperatur erhöht ist. Weist beispielsweise das Glas eine Glasübergangstemperatur von 520 °C auf, entspricht der halbe Abstand zu T_{g} einer Temperaturerhöung von 250 °C. Demnach wird die Perforationslinie bei einer Temperatur von mindestens Raumtemperatur (20 °C) + 250 °C, also bei mindestens 270 °C eingefügt. Gemäß einer Weiterbildung erfolgt dabei das Einfügen der Perforationslinie bei einer Temperatur, die mindestens Raumtemperatur plus drei Viertel des Temperaturintervalls zwischen Raumtemperatur und Glasübergangstemperatur entspricht. Bei dem vorstehenden Beispiel wäre dies also eine Temperatur von mindestens 20 °C + (3/4)*500°C = 395 °C.

Besonders bevorzugt wird die Erfindung für Heißverarbeitungs-Prozesse in Form von Heißformgebungs-Verfahren verwendet. Die Vorrichtung zur Heißverarbeitung von Glaselementen umfasst also gemäß einer bevorzugten Ausführungsform eine Vorrichtung zur Heißformgebung von Glaselementen. Insbesondere kann die Heißformgebung das Formen des Glaselements aus einer Schmelze umfassen.

Um eine effektive Herabsetzung der Bruchkräfte durch Zwangskühlung zu erreichen, kann auf Kühlverfahren im Zusammenhang mit laserbasiertem thermischen Trennen, beispielsweise dem Trennen mit einem CO₂-Laser, zurückgegriffen werden. Beispielsweise kann ein Anblasen mit Luft, anderen gasförmigen Medien oder Luft/Gas-Flüssigkeitsgemischen (Aerosolen) oder das Abschrecken durch Eintauchen in eine Flüssigkeit (Abschrecken) eingesetzt werden. Das Abschrecken kann auch durch einen Flüssigkeitsvorhang aus einer Gießdüse erfolgen, durch welchen das Glaselement hindurchläuft. Günstig ist beim Abkühlen, dass durch den Kontakt des modifizierten Bereichs des Substrates eine mindestens lokale Kühlung des Bereichs mit den filamentförmigen Schädigungen erfolgt und hierdurch lokal eine thermische Spannung entsteht, die Mikrorisse um die Filamentierungsmodifikation, beziehungsweise filamentförmige Schädigung vergrößert und so eine weitere Schwächung des Materials hervorruft. Die Wahl des Kühlverfahrens kann gemäß den Erfordernissen der vorliegenden Produktionsrandbedingungen und Prozessparameter erfolgen.

Durch das lokale Abschrecken kommt es zu einer Erhöhung der Spannungen und damit zu einer verstärkten Ausbildung oder Verlängerung von Mikrorissen, so dass die für das spätere Separieren erforderliche Bruchspannung in Folge der stärkeren Vorschädigung herabgesetzt wird.

Als Ultrakurzpulslaser für die Zwecke der Erfindung besonders geeignet ist ein Neodym-dotierter Yttrium-Aluminium-Granat-Laser mit einer Wellenlänge von 1064 Nanometern. Dieser Laser kann für alle in dieser Offenbarung beschriebenen Ausführungsformen verwendet werden. Die mittlere Leistung eines für die Erfindung geeigneten Ultrakurzpulslasers liegt vorzugsweise in einem Bereich von 20 bis 300 Watt. Um die filamentförmigen Schädigungen zu erzielen, wird gemäß einer vorteilhaften Weiterbildung der Erfindung eine Pulsenergie im Burst von mehr als 400 Mikrojoule eingesetzt, ferner vorteilhaft eine gesamte Burstenergie von mehr als 500 Mikrojoule.

Beim Betrieb des Ultrakurzpuls-Lasers im sogenannten Burst-Modus ist die Repetitionsrate die Wiederholrate der Abgabe von Bursts. Die Pulsdauer ist im Wesentlichen unabhängig davon, ob ein Laser im Einzelpulsbetrieb oder im Burst-Mode betrieben wird. Die Pulse innerhalb eines Bursts weisen typischerweise eine ähnliche Pulslänge auf, wie ein Puls im Einzelpulsbetrieb. Die Burstfrequenz kann im Bereich von 15 MHz bis 90 MHz, bevorzugt im Intervall von 20 MHz bis 85 MHz liegen. Gemäß einem Beispiel beträgt die Burstfrequenz beispielsweise 50 MHz, wobei die Anzahl der Pulse im Burst zwischen 1 und 10 Pulsen, z.B. bei 6 Pulsen, liegen.

Der mittlere Abstand zwischen benachbarten filamentförmigen Schädigungen beträgt allgemein nach einer Ausführungsform der Erfindung 1µm bis 10µm, bevorzugt 3-8µm.

Um eine hinreichende mechanische Spannung an den filamentförmigen Schädigungen zu erzeugen, welche den nachfolgenden Trennprozess erleichtert, ist gemäß noch einer Ausführungsform vorgesehen, dass das Glaselement mit einer Kühlrate von mindestens 50 °C pro Sekunde, vorzugsweise von mindestens 100 °C abgekühlt wird. Dies muss nicht für die gesamte gekühlte Fläche gelten, vorzugsweise an der Oberfläche, aber zumindest am Ort der filamentförmigen Schädigungen. Vorzugsweise wird die Kühlung auch so durchgeführt, dass zu mindestens einem Zeitpunkt am Ort der filamentförmigen Schädigungen jeweils ein Temperaturgradient von mindestens 50 °C pro Millimeter aufgebaut wird. Dieser Temperaturgradient kann entlang der Oberfläche und/oder im Volumen des Glases liegen. Beispielsweise würde bei einem Abschrecken des Glases die Oberfläche großflächig gekühlt werden, so dass ein Temperaturgradient von der Oberfläche hinein in das Innere des Glases entsteht. Der Gradient verläuft dann also in Längsrichtung der filamentförmigen Schädigungen.

Die Erfindung wird nachfolgend genauer anhand und unter Bezugnahme auf die beigeschlossenen Zeichnungen erläutert.

### Kurzbeschreibung der Figuren

Fig. 1 zeigt eine Vorrichtung zur Verarbeitung von Glaselementen.
Fig. 2 zeigt eine Variante der Vorrichtung.
Fig. 3 stellt eine Vorrichtung zur Herstellung von Floatglas dar.
Fig. 4 zeigt eine Anordnung zum Einfügen einer Perforationslinie in ein Glasrohr.
Fig. 5 ist ein Diagramm der Messwerte von Bruchkräften beim Aufbrechen der Perforationslinien.
Die Fig. 6 und Fig. 7 zeigen Vorrichtungen zur Herstellung von Glasrohren nach dem Danner- und dem Vello-Verfahren.
Fig. 8 zeigt einen Bearbeitungskopf.
Fig. 9 zeigt eine Anordnung mit einer Kühlung der dem Auftreffpunkt des Laserstrahls gegenüberliegenden Seite.

### Ausführliche Beschreibung der Erfindung

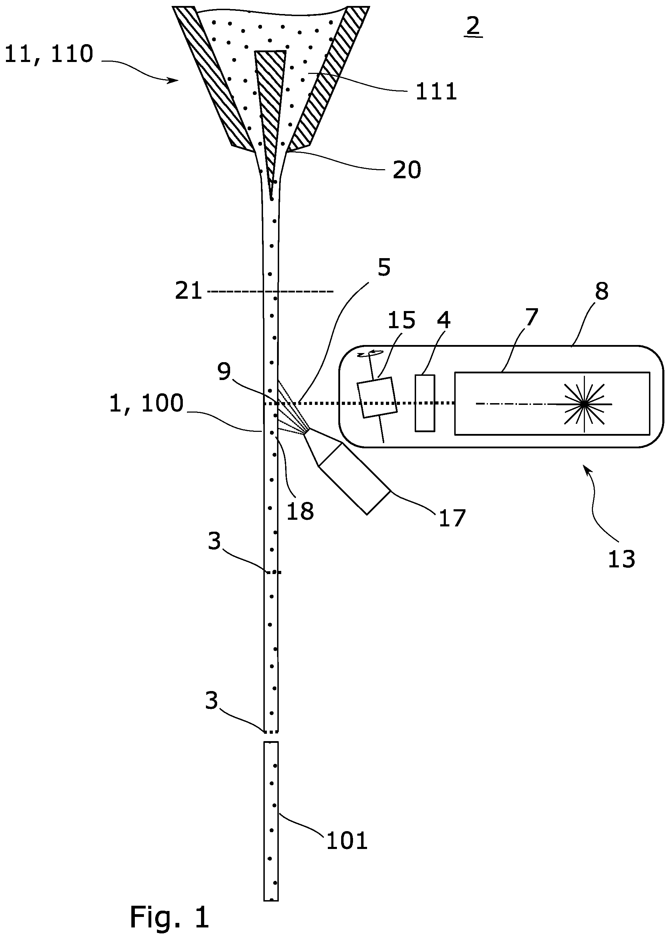

Fig. 1 zeigt eine beispielhafte Ausführungsform einer Vorrichtung 2 zur Verarbeitung von Glaselementen. Der Begriff der Verarbeitung erfasst im Sinne dieser Offenbarung allgemein auch deren Herstellung. Eine typische Verarbeitung ist die Heißformgebung von Glaselementen. Fig. 1 ist ein Beispiel für eine solche Verarbeitung. Hier wird ein Glaselement in Form eines kontinuierlichen Glasbands 100 durch eine nach unten gerichtete schlitzförmige Düse 20 aus einer Glasschmelze 111 gezogen. Dieses Heißformverfahren für Glasbänder, beziehungsweise Glasscheiben ist auch als Down-Draw-Verfahren bekannt. Ebenso möglich ist auch eine Heißformung nach dem Overflow-Fusion-Verfahren. Mit steigender Entfernung zur Düse 20 sinkt die Temperatur des Glases, bis an der Position 21 die Glasübergangstemperatur Tg unterschritten wird. Allgemein, ohne Beschränkung auf das spezielle dargestellte Beispiel, ist gemäß einer bevorzugten Ausführungsform vorgesehen, dass das Einfügen der Perforationslinie bei einer Temperatur des Glases unterhalb der Glasübergangstemperatur erfolgt. Es ist aber sogar möglich, die Perforationslinie zumindest teilweise oberhalb der Glasübergangstemperatur einzufügen. Als Obergrenze ist dann die Schmelztemperatur anzusehen, beziehungsweise eine Temperatur, bei der die Glasviskosität einen Wert von 10⁴ dPa·s hat. Das Filamentieren bei einer Temperatur unterhalb der Glasübergangstemperatur ist aber günstig, um Form und Lage der Filamente möglichst nach dem Einfügen nicht mehr zu beeinflussen. Diese Bedingung kann auch schon bereits bei Temperaturen unterhalb des Erweichungspunktes, also der Temperatur, bei der die Viskosität einen Wert von 10^{7,6} dPa·s hat, gegeben sein, da unterhalb dieser Temperatur das Glas schon formstabil ist. Gemäß einer Weiterbildung der Erfindung ist daher vorgesehen, dass das Einfügen der Perforationslinie 3 bei einer Temperatur des Glases unterhalb der Temperatur, bei welcher das Glas eine Viskosität von 10⁴ dPa·s hat, vorzugsweise bei einer Temperatur unterhalb des Erweichungspunktes, insbesondere unterhalb der Deformationstemperatur bei einer Viskosität von 10^{11,5} dPa·s, besonders bevorzugt bei einer Temperatur unterhalb des oberen Kühlpunkts bei einer Viskosität des Glases von 10¹³ dPa·s und ganz besonders bevorzugt der unterhalb der Glasübergangstemperatur erfolgt.

Die Vorrichtung 2 umfasst allgemein eine Einrichtung 13 zum Einfügen einer Perforationslinie 3 in das Glaselement 1. Die Perforationslinie 3 stellt eine gezielte Sollbruchstelle oder Schwächung des Materials dar, so dass das Glaselement 1 entlang der Perforationslinie 3 später leicht aufgetrennt werden kann. Die Einrichtung 13 umfasst einen Ultrakurzpulslaser 7, welcher so angeordnet und ausgerichtet ist, dass dieser in einem Bereich der Vorrichtung 2 zur Verarbeitung von Glaselementen 1 auf das Glaselement 1, hier also das Glasband 100, einstrahlt, in welchem das Glaselement 1 noch eine Temperatur von mindestens 100 °C aufweist.

Wie aus der Figur ersichtlich, befindet sich der Auftreffpunkt des Laserstrahls 5 vorzugsweise aber an einer Position, die weiter von der Düse entfernt ist, als die Position 21, an welcher das Glas die Glasübergangstemperatur erreicht. Die Temperatur des Glases liegt folglich allgemein in einem Bereich zwischen 100°C und der Glasübergangstemperatur.

Allgemein kann wie dargestellt eine strahlformende Optik 4 vorgesehen sein, um den Laserstrahl anzupassen. Insbesondere kann die strahlformende Optik 4 den Laserstrahl 5 fokussieren, um im Glas die Leistungsdichte zu erhöhen. Die einzelnen filamenförmigen Schädigungen 9 verlaufen der Ausbreitungsrichtung des Laserstrahls 5 folgend in ihrer Längsrichtung quer, vorzugsweise senkrecht zur Oberfläche des Glaselements 1.

Bei dem dargestellten Beispiel umfasst die Verarbeitung des Glaselements 1 die Vereinzelung in einzelne Glasscheiben 101. Die Perforationslinien 3 sorgen hier für einen kontrollierten, sauberen Bruch. Um die in diesem Beispiel senkrecht zur Darstellungsebene und senkrecht zur Längsrichtung des Glasbands 100 verlaufenden Perforationslinien 3 aus nebeneinanderliegenden filamentförmigen Schädigungen 9 einzufügen, wird der Laserstrahl 5 dementsprechend senkrecht zur Längsrichtung über das Band 100 hinwegbewegt. Dazu ist eine Bewegungseinrichtung 15 vorgesehen, um den Auftreffpunkt des Laserstrahls 7 entlang eines vorgesehenen Verlaufs der Perforationslinie 3 zu bewegen. Hierbei kann sowohl der Laserstrahl über das Glas geführt, als auch das Glas am Laserstrahl vorbeigeführt werden. Ebenso ist eine Kombination beider Varianten möglich. Um den Laserstrahl 5 senkrecht zur Bewegungsrichtung des Glasbands 100 zu bewegen, kann beispielsweise ein Galvanometer-Scanner verwendet werden. Da das Glasband 100 sich gleichzeitig weiterbewegt, kann die Bewegungseinrichtung 15 den Laserstrahl 5 leicht schräg über das Glaselement 1 führen, um die Bewegung des Glasbands zu kompensieren. Der Galvanometer-Scanner ist daher hier leicht schräg angeordnet dargestellt. Um in dieser Ausführungsform einen zur Kante des Glasbandes senkrecht verlaufenden Schnittverlauf zu gewährleisten ist die Schrägstellung des Scannerspiegels abhängig von der Geschwindigkeit des Glasbandes und kann gegebenenfalls angepasst werden.

Durch die besonderen Umgebungsbedingungen in der Nähe des Heißformungsprozesses, insbesondere bei einer Formung aus einer Glasschmelze wie im dargestellten Beispiel ist es von Vorteil, wenn wie dargestellt, die Strahlformungsoptik 4 und gegebenenfalls weitere Komponenten der Einrichtung 13 in einer gekühlten Einhausung 8 angeordnet sind. Insbesondere können auch der Laser 7 und/oder die Bewegungseinrichtung 15 in der gekühlten Einhausung 8 angeordnet werden. Eine gekühlte Einhausung kann vorteilhaft generell für eine Vorrichtung 2, ohne Beschränkung auf das Beispiel der Fig. 1 vorgesehen sein.

Nachdem die Perforationslinien 3 aus nebeneinanderliegenden filamentförmigen Schädigungen 9 eingefügt wurden, können schließlich die einzelnen Glasscheiben 101 abgetrennt werden. Ein Vorteil des Verfahrens liegt darin, dass die Strecke, die das Glas durchläuft, verkürzt werden kann, da die Vorbereitung des Trennens noch am heißen Glas durchgeführt wird. Bei den hohen Temperaturen des Glases sind - wie oben dargelegt - die eingefügten, filamentförmigen Schädigungen im Allgemeinen nicht so ausgeprägt, wie bei einer Bearbeitung bei Raumtemperatur. Um dennoch eine zuverlässige und leichte Trennbarkeit zu erreichen, wird während dem Einfügen der filamentförmigen Schädigungen 9 das Glaselement 1 räumlich begrenzt, d.h. in der Nähe der filamentförmigen Schädigungen, so abgekühlt, dass ein Temperaturgradient entsteht, welcher an den filamentförmigen Schädigungen 9 eine mechanische Spannung induziert, wodurch die zum Auftrennen des Glaselements 1 entlang der Perforationslinie 3 erforderliche Bruchkraft reduziert wird. Dazu weist die Vorrichtung 2 zur Verarbeitung von Glaselementen 1 eine Kühleinrichtung 17 auf, welche so angeordnet ist, dass diese das Glaselement 1 während dem Einfügen der filamentförmigen Schädigungen 9 das Glaselement 1 so abkühlt, dass der genannte Temperaturgradient entsteht. Besonders bei dünnen Gläsern ist dabei eine hohe Kühlrate günstig, um hinreichende Spannungen aufzubauen. Die Kühlrate beträgt vorzugsweise mindestens 50 °C pro Sekunde.

Gemäß der Erfindung umfasst die Kühleinrichtung 17 eine Düse 20 zur Abgabe eines Kühlfluid-Strahls 18. Die Kühlung kann beispielsweise durch Anblasen mit Luft, anderen gasförmigen Medien oder Aerosolen (Gas-Flüssigkeitsgemischen), vorzugsweise mit Luft als Träger erfolgen. Das Kühlfluid kann auch ein Flüssigkeitsstrahl sein. Gemäß einer Ausführungsform der Erfindung ist daher ohne Beschränkung auf das spezielle dargestellte Beispiel vorgesehen, dass das Abkühlen durch Anblasen mit Luft oder einem Aerosol oder durch Aufspritzen einer Flüssigkeit erfolgt.

In einer weiteren Ausführungsform wird das Abkühlen durch Abschrecken in einer kühleren Flüssigkeit bevorzugte Temperatur kleiner als Raumtemperatur, besonders bevorzugt kleiner als 0° C durchgeführt. Diese Ausführungsform kann alternativ oder zusätzlich zum Anblasen erfolgen. Beispielsweise kann nach einer ersten, vorsichtigeren Abkühlung durch Anblasen eine rasche Abkühlung durch Abschrecken erfolgen.

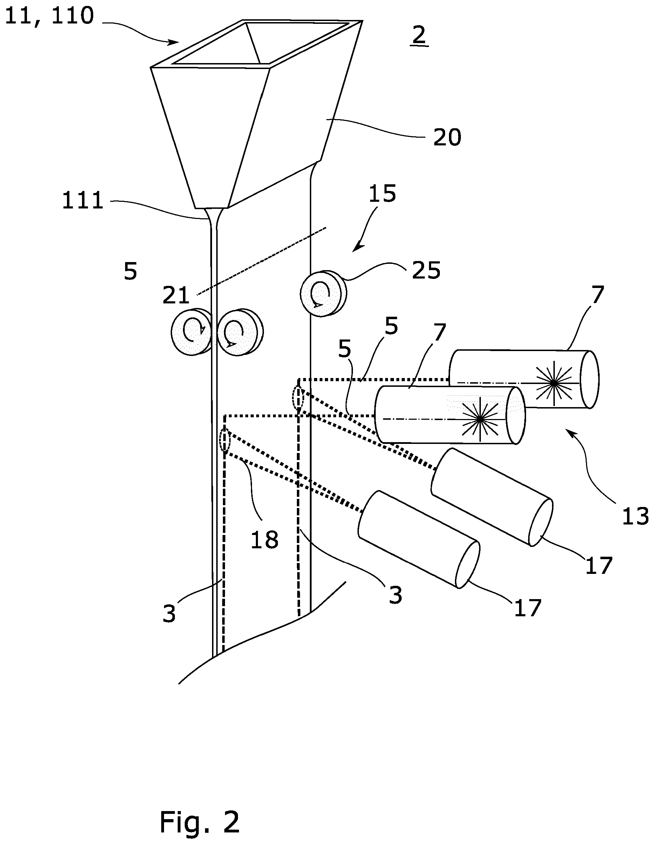

Fig. 2 zeigt eine alternative oder zusätzliche Ausgestaltung der Ausführungsform gemäß Fig. 1. Bei dieser Ausführungsform der Vorrichtung 2 zur Verarbeitung von Glaselementen 1 wird ebenfalls ein kontinuierliches Glasband 100 aus einer Düse 20, insbesondere in Form eines Dünnglas-Bands gezogen. Das Ziehen kann wie dargestellt mit dem Down-Draw-Verfahren, oder auch mit dem Overflow-Fusion-Verfahren vorgenommen werden. Ein weiteres, generell anwendbares Heißform-Verfahren ist das Redraw-Verfahren, bei welchem eine Vorform erhitzt und ausgezogen wird. Die Dicke des Glasbands liegt allgemein und ohne Beschränkung auf die dargestellten Beispiele und Ziehverfahren vorzugsweise im Bereich von 0,01 mm bis 20 mm, bevorzugt im Bereich von 0,05 mm bis 10 mm, insbesondere im Bereich von 0,1 mm bis 4 mm, ganz besonders bevorzugt im Bereich von 0,1 mm bis 2 mm.

Prozessbedingt kommt es hierbei zur Ausbildung einer sogenannten Borte (d.h. einer "wulstartigen" Verdickung) an den beiden Rändern des Glasbandes, die unter anderem durch einen Laserprozess, beispielsweise mit einem CO₂-Laser oder mit einem Ultrakurzpuls-Laser abgetrennt werden können. Wegen der beim Separationsvorgang aufgewendeten hohen Bruchkräfte kann es hierbei zu in das Glasband einlaufenden Rissen kommen, die bis zur Zerstörung des Glasbandes führen können. Daher wird das aus der Heißformungs-Zone kommende Glasband wie im Beispiel gezeigt mittels zweier Ultrakurzpuls-Laser 7 im Bortenbereich filamentiert und ein- oder beidseitig entlang der Perforationslinie 3 lokal mittels Kühlvorrichtungen 17 in Form von Kühldüsen gekühlt. Hierbei kann die Kühlrate durch Regelung der Durchflussmenge des Kühlfluids an die Prozessparamter (Glasbandtemperatur und Vorschubgeschwindigkeit) des jeweiligen Heißformungs-Prozesses angepasst werden, um eine Beeinflussung des Glasbandes 100 in der Qualitätsfläche (Erzeugen von Spannungen im Glasband) zu verhindern. Das derart vorbereitete Glasband 100 kann im kalten Zustand (beispielsweise beim oder nach dem Umlenken in einen horizontalen Teil der Produktionslinie) durch Einbringen einer mechanischen Spannung abgetrennt werden. Eine Möglichkeit hierzu ist das Führen der Perforationslinie 3 über eine ballige Rolle.

Die Borten 102 verlaufen entlang der Kanten des Glasbands 100 in Längsrichtung. Dementsprechend werden auch die Perforationslinien 3 in Längsrichtung des Glasbands nahe der Kanten eingefügt. Der Laserstrahl 5 kann bei dieser Ausführungsform der Erfindung in Wesentlichen ortsfest bleiben. Die Bewegungseinrichtung 15 umfasst hier insbesondere Ziehrollen 25, welche das Glasband 100 abziehen und damit an der Einrichtung 13 zum Einfügen der Perforationslinie 3, insbesondere an dem einen oder den mehreren Ultrakurzpulslasern vorbeibewegen.

Allgemein, ohne Beschränkung auf das spezielle dargestellte Beispiel ist in Zusammenfassung gemäß einer Ausführungsform eine Heißverarbeitungsvorrichtung 11 in Form einer Heißformgebungs-Vorrichtung 110 zum Ziehen eines Glaselements 1 in Form eines langgestreckten Glasbands 100 vorgesehen, wobei die Einrichtung 13 zum Einfügen einer Perforationslinie 3 dazu eingerichtet ist, Perforationslinien in Längsrichtung des Glasbands 100 einzufügen, an welchen streifenförmige Randbereiche, die jeweils eine verdickte Borten 102 aufweisen, abtrennbar sind. Wie dargestellt kann die Bewegungseinrichtung 15 eine Zieheinrichtung, insbesondere Ziehrollen 25 umfassen. Die Ausführungsform ist analog auf andere Ziehverfahren, wie dem Up-Draw-Verfahren, dem Overflow-Fusion und dem Redraw-Verfahren, sowie auch auf Rohrzug-Verfahren, insbesondere auf das Danner- oder das Vello-Verfahren anwendbar.

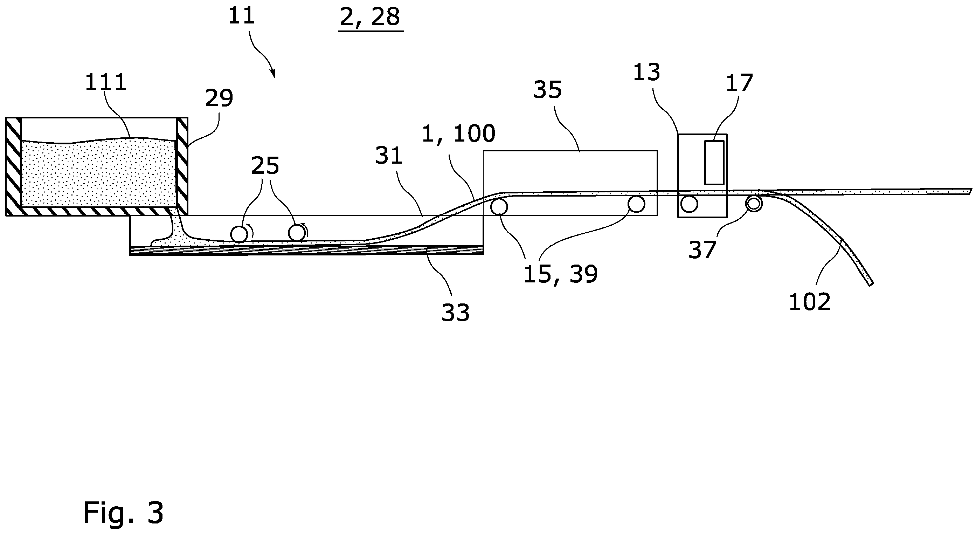

Noch eine weitere Variante zeigt Fig. 3. Bei der hier dargestellten Vorrichtung 2 zur Verarbeitung von Glaselementen 1 handelt es sich wieder um eine Vorrichtung zur Herstellung eines Glasbands 100. Die Vorrichtung 11 zur Heißverarbeitung umfasst hier eine Floatwanne 31. In die Floatwanne 31 fließt die Glasschmelze 111 aus einer Schmelzwanne 29 und wird dort mit Ziehrollen verteilt und zu einem auf einem Zinnbad 33 schwimmenden Glasband 100 ausgezogen. Das Glasband 100 durchläuft anschließend einen Kühlofen 35. Die Einrichtung 13 zum Einfügen einer Perforationslinie 3 ist vorzugsweise am Ausgang des Kühlofens 35 angeordnet. Es ist aber auch möglich, die Perforationslinie vor oder im Kühlofen einzufügen. Die Kühleinrichtung 17 kann in die Einrichtung 13 integriert sein. Beispielsweise kann die Kühleinrichtung 17 wieder ein oder mehrere Kühldüsen oder auch ein Flüssigkeitsbad oder eine Gießdüse für einen Flüssigkeitsstrahl oder -vorhang zum lokalen Abschrecken des Glases umfassen.

Auch bei der in Fig. 3 gezeigten Ausführungsform kann die Einrichtung 13 dazu dienen, in Längsrichtung des Glasbands 100 verlaufende randseitige Perforationslinien 3 einzufügen, um die Borten 102 des Glasbands 100 abzutrennen. Für das Abtrennen kann allgemein eine Trenneinrichtung 37, beispielsweise in Gestalt der bereits erwähnten balligen Walzen vorgesehen sein. Die Borte 102 trennt sich an der Trenneinrichtung 37 vom übrigen Glasband 100 und kann dann in einem Scherbencontainer aufgefangen werden. Der Transport des Glasbands 100 durch den Kühlofen 35 erfolgt durch Transportrollen 39, die demgemäß Bestandteil der Bewegungseinrichtung 15 bilden, mit welcher der Laserstrahl über das Glaselement 1, beziehungsweise das Glasband 100 geführt wird.

Vorzugsweise beträgt die Temperatur am Ausgang des Kühlofens zwischen 100 °C und 400 °C. Dies ist auch allgemein, unabhängig von dem Verfahren der Heißverarbeitung ein bevorzugter Temperaturbereich. Ebenfalls bevorzugt ist ein Einfügen der Perforationslinie 3 bei einer Temperatur an oder unterhalb des unteren Kühlpunkts, also bei einer Temperatur, bei welcher die Viskosität des Glases mindestens 10¹³ dPa·s beträgt. Diese Bedingung ist typischerweise am Ausgang des Kühlofens gegeben. Durch die Temperatur unterhalb des unteren Kühlpunkts kann beim Abkühlen durch die Kühleinrichtung 17 der Aufbau unerwünschter permanenter Spannungen vermieden werden. Die Perforationslinie 3 wird also gemäß einer Weiterbildung der Erfindung an einer Position auf dem Glaselement 1 eingefügt, an welcher wenigstens eine der vorgenannten Bedingungen vorliegt, also eine Temperatur im genannten Bereich zwischen 100 °C und 400°C oder unterhalb des unteren Kühlpunkts. Diese Weiterbildung der Erfindung ist selbstverständlich nicht auf das Floatverfahren beschränkt, sondern die genannten Temperaturbereiche können bei allen Heißverarbeitungsverfahren beim Einfügen der Perforationslinie zum Einsatz kommen.

Das Floatverfahren eignet sich besonders für die Fertigung dickerer Gläser mit Dicken im Bereich von 0,3 mm bis 8 mm, vorzugsweise bis 4 mm. Auch mit den anderen genannten Ziehverfahren lassen sich aber solche dickeren Gläser herstellen. Allgemein, ohne Beschränkung auf die in den Fig. 1 bis Fig. 3 dargestellten speziellen Ausführungsformen umfasst die Vorrichtung 110 zur Heißformgebung also eine Vorrichtung zum Herstellen eines Glasbands 100 mit dem Down-Draw-Verfahren, dem Overflow-Fusion-Verfahren, dem Redraw-Verfahren oder dem Floatverfahren.

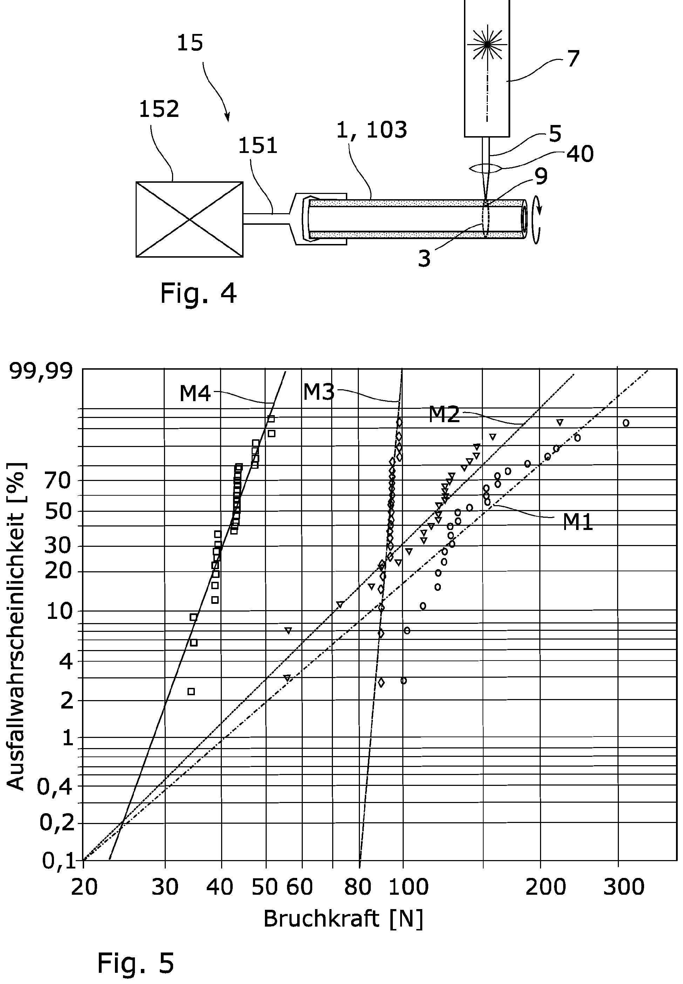

Im Folgenden werden Beispiele zum Trennen von Glasrohren beschrieben. Dabei wurden Glasrohre (Material: Fiolax klar; Durchmesser: 6,85 mm; Innendurchmesser: 4,85 mm) in einem Rohrofen auf ca. 304°C erwärmt. Die Temperatur wurde mit einem Pyrometer gemessen. Die Glasrohre wurden aus dem Ofen genommen und direkt unter Drehung auf einer motorgetriebenen Achse entlang eines Umfangkreises filamentiert. Fig. 4 zeigt schematisch die Anordnung des Rohres auf der hier als Bewegungseinrichtung 15 dienenden, durch einen Motor 152 angetriebenen Achse 151. Durch die Drehung während des Einstrahlens des Laserstrahls 5 entsteht eine auf dem Glasrohr 103 umlaufende Perforationslinie 3. Zur Erzeugung der filamentförmigen Schädigungen 9 wurde ein Ultrakurzpulslaser 7 mit einer Wellenlänge von 1064 nm verwendet. Der Laserstrahl 5 wird mit einer bikonvexen Linse 40 als strahlformender Optik 4 mit einer Brennweite von 20 mm auf das Glaselement 1, beziehungsweise das Glasrohr 103 fokussiert. Der Rohstrahldurchmesser des Laserstrahls 5 betrug 12 mm. Der Ultrakurzpulslaser wurde im Burst-Modus mit vier Bursts pro Puls betrieben. Die Drehgeschwindigkeit und die Repetitionsrate des Lasers waren so eingestellt, dass die filamentförmigen Schädigungen entlang der Perforationslinie auf der äußeren Oberfläche einen Abstand von 7µm aufweisen.

In einer ersten Messreihe wurden die so mit einer Perforationslinie 3 versehenen Glasrohre 103 ohne aktive Kühlung abkühlen lassen. In einer zweiten Messreihe wurden die Glasrohre 103 mit Wasser abgeschreckt. Als Vergleichsversuch wurden in einer dritten Messreihe die Glasrohre bei Raumtemperatur mit dem Ultrakurzpulslaser bearbeitet. Schließlich wurden in einer vierten Messreihe die Glasrohre 103 nach dem Filamentieren bei 304 °C mit einer Kühldüse durch Beaufschlagung mit einem Luft/Wasser-Kühlgemisch, beziehungsweise einem Luft-Wasser-Aerosol entlang der Perforationslinie zwangsgekühlt. Der Volumenstrom betrug 0,2 ml/min. Zu jeder Messreihe wurden mindestens 24 Proben getestet. Die Festigkeit der Perforationslinien 3 wurde in einem modifizierten Biegefestigkeitsversuch nach DIN EN 843-1 durch Ermittlung der mittleren Bruchspannung, beziehungsweise der Weibull-Parameter ermittelt.

Fig. 5 zeigt die Messergebnisse in einem Diagramm mit doppellogarithmisch skalierten Achsen. Die Darstellung dieses Diagramms entspricht einem Weibull-Diagramm. Die Graphen der Messwerte zu den Messreihen 1 bis 4 sind als M1 bis M4 bezeichnet. Zur besseren Verfolgbarkeit der Messreihen und zur Ermittlung von Weibull-Parametern sind zu den einzelnen Graphen jeweils Regressionsgeraden eingetragen. Die Ergebnisse sind in der nachfolgenden Tabelle wiedergegeben:

| Messreihe: | Anzahl Proben | Bruchkraft-Mittelwert | Streuung |
|---|---|---|---|
| | | N | N |
| M1: Perforationslinie eingefügt bei 304°C, langsames Abkühlen | 24 | 154,86 | 49,12 |
| M2: Perforationslinie eingefügt bei 304°C, Kühlung durch Abschrecken. | 24 | 118,08 | 34,44 |
| M3: | 25 | 94,06 | 2,66 |
| M4: | 30 | 42,49 | 4,41 |
| | | | |

Es wurde festgestellt, dass bei definierter lokaler Zwangskühlung nach Filamentation im heißen Zustand die Bruchkräfte nur noch halb so groß sind (bei vergleichbarer Streuung) als bei Filamentation bei Raumtemperatur. Bei unkontrollierter flächenhafter Kühlung des Substrates nach Filamentation im heißen Zustand hingegen sind die Bruchkräfte zwar im Mittel um mehr als 50 % erhöht gegenüber den Verhältnissen bei Raumtemperatur, allerdings liegen die Werte immer noch deutlich unterhalb der Bruchkräfte, die bei einem langsamen Abkühlen auftreten.

Nur die Messreihe 2 zeigte übrigens eine Verteilung der Bruchkraft-Werte, die einer Weibull-Verteilung angenähert ist. Zum Mittelwert von 118 N und einer Streuung von 34 N kann hier noch ein charakteristischer Wert von 130 N und ein Weibull-Modul von 4,0 errechnet werden. Die Beispiele zeigen, dass mit der Erfindung generell deutliche Erniedrigungen der Bruchkräfte zu erreichen sind.

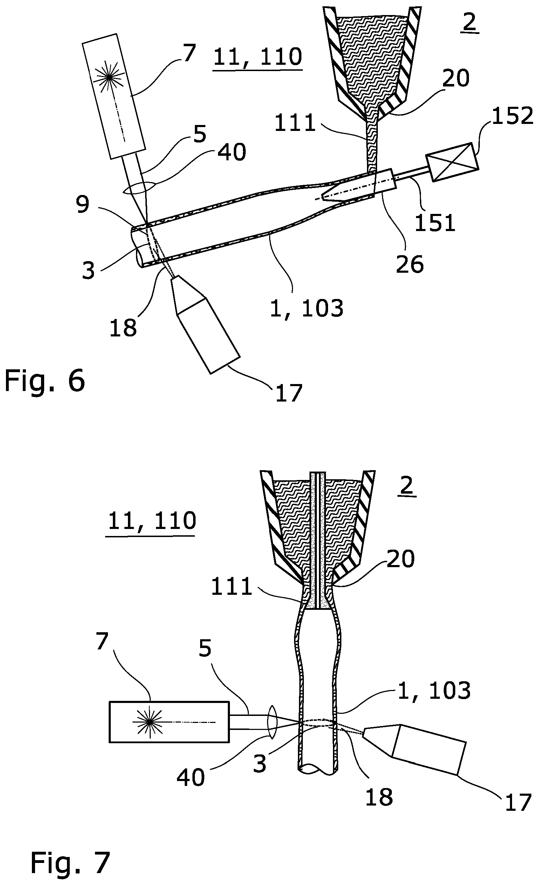

Bei dem Beispiel der Fig. 4 wurden zugeschnittene Glasrohre bearbeitet. Das Verfahren gemäß dieser Offenbarung kann aber analog zu den auch anhand der Fig. 1 bis Fig. 3 beschriebenen Beispielen auch bei der Heißformgebung von Rohren aus einer Glasschmelze 111 angewendet werden. Fig. 6 zeigt hierzu ein Beispiel, bei welchem ringförmige Perforationslinien 3 in ein kontinuierlich im Danner-Verfahren gezogenen Glasrohr 103 eingefügt werden. An diesen Perforationslinien 3 kann dann das Glasrohr 103 in kürzere Abschnitte zerteilt werden. Bei diesem Verfahren läuft die Glasschmelze 111 auf eine Spindel 26, die über einen Schaft 151 mit einem Motor 152 in Rotation versetzt ist. Durch die Rotation verteilt sich die Glasschmelze über den Umfang der Spindel 26. Gleichzeitig wird das so entstehende Rohr von der Spindel 26 abgezogen. Durch die Spindel 26 hindurch kann Pressluft zugeführt werden, um zu verhindern, dass das Rohr hinter der Spindel 26 zusammenfällt. Die Rotation des Glasrohres 103 sorgt bereits dafür, dass der Laserstrahl 5 über den Umfang des Glasrohres geführt und eine ringförmige Perforationslinie 3 in das noch heiße Glas einfügt, wobei noch eine Nachführung des Lasers 7 in axialer Richtung mit der Vorschubgeschwindigkeit des Rohres 103 zweckmäßig ist.

Fig. 7 zeigt ein weiteres Beispiel. Bei der hier gezeigten Vorrichtung 2 wird ein kontinuierliches Glasrohr 103 im Vello-Verfahren gezogen. Das Verfahren ähnelt dem Down-Draw-Verfahren nach Fig. 1, da das Glasrohr 103 durch eine nach unten offene Düse 20 nach unten abgezogen wird. In der Düse 20 ist ein Dorn 42 angeordnet, so dass sich ein ringförmiger Düsenspalt ergibt. Die Glasschmelze 111 fließt den Dorn entlang und wird als Rohr am Ende des Dorns 42 abgezogen. Durch einen zentralen Kanal 44 im Dorn 42 kann Pressluft zugeführt werden, um zu verhindern, dass das anfangs noch weiche Rohr zusammenfällt. Ebenso wie bei dem Beispiel der Fig. 6 wird mit dem Laser 7 eine ringförmige Perforationslinie 3 eingefügt und mittels einem Kühlfluid-Strahl 18 lokal abgekühlt, um die Bruchkraft zu reduzieren.

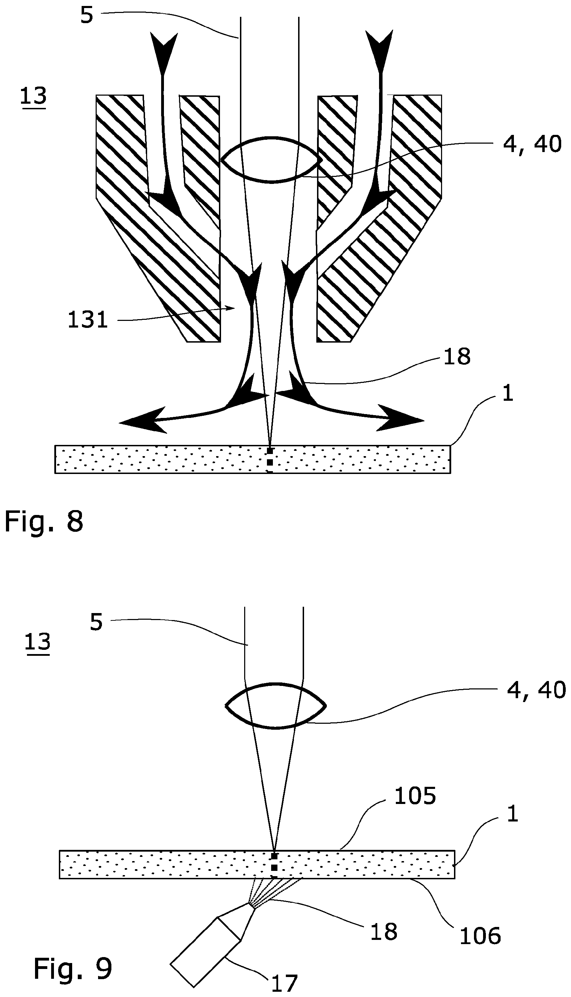

Die erfindungsgemäße Vorgehensweise mit einer Filamentation am heißen Glas und aktiver Kühlung wird derart ausgeführt, dass das Einfügen der Perforationslinie mit dem Ultrakurzpulslaser und das Kühlen zeitgleich erfolgen. Dabei kann auf das Verfahren des Laserschweißens zurückgegriffen werden, bei dem durch einen geeignet konstruierten Schweißkopf die Prozessgase dem Arbeitsvolumen des Laserstrahls zugeführt werden und hier statt der Prozessgase das entsprechende Kühlmittel bereits während des Filamentierens zugeführt wird. Gemäß einer Ausführungsform einer erfindungsgemäßen Vorrichtung zur Verarbeitung von Glaselementen ist dazu vorgesehen, dass die Einrichtung 13 zum Einfügen einer Perforationslinie 3 einen Kopf umfasst, durch welchen das Laserlicht eingestrahlt und das Kühlfluid, insbesondere der Kühlstrahl auf das Glaselement 1 gerichtet wird. Einen solchen Bearbeitungskopf 130 zeigt Fig. 8. Der Bearbeitungskopf 130 weist einen auf das Glaselement 1 gerichteten Kanal 131 auf, durch den hier sowohl der Laserstrahl 5, als auch der Kühlfluid-Strahl 18 geführt wird, so dass der Auftreffpunkt des Laserstrahls 5 im Kühlfluid-Strahl 18 liegt und vom Kühlfluid umgeben ist. Die Konfiguration mit einem gemeinsamen Kanal ist vorteilhaft, aber nicht zwingend. Unabhängig von der speziellen Ausgestaltung ist aber in einer Ausführungsform der Erfindung vorgesehen, dass die Einrichtung 13 zum Einfügen der Perforationslinie 3 einen Bearbeitungskopf 130 umfasst, durch welchen sowohl der Laserstrahl 5, als auch der Kühlstrahl auf das Glaselement 1 gerichtet werden, so dass der Auftreffpunkt des Laserstrahls 5 auf dem Glaselement 1 im Kühlfluid-Strahl 18 liegt. Eine kompakte Anordnung, bei welcher allgemein das Kühlfluid direkt den vom Laserstrahl 5 bearbeiteten Bereich kühlt, ist gemäß noch einer Ausführungsform möglich, bei welcher durch eine geeignet angeordnete Kühleinrichtung 17 der Kühlfluid-Strahl 18 auf die Fläche des Glaselements 1 gerichtet ist, an der der Laserstrahl 5 wieder austritt, beziehungsweise, bei welcher der Kühlstrahl auf eine Fläche des Glaselements 1 gerichtet ist, welche der Fläche gegenüberliegt, auf welcher der Laserstrahl 5 auftrifft. Ein Beispiel dieser Variante zeigt Fig. 9. Der Laserstrahl trifft fokussiert durch die Strahlformungs-Optik 4 mit Linse 40 auf die Fläche 105, während der Kühlfluid-Strahl 18 auf die gegenüberliegende Fläche 106 gerichtet ist, aber hier ebenfalls wie bei der Ausführungsform gemäß Fig. 6 auf den Ort der Bestrahlung einwirkt und einen Temperaturgradient und damit eine mechanische Spannung erzeugt.

Allen dargestellten Beispielen ist gemeinsam, dass die Kühlung während dem Filamentieren lokal begrenzt erfolgt. Dies ist allgemein, ohne Beschränkung auf die speziellen gezeigten Beispiele, von Vorteil, um Spannungen im Glas zu vermeiden.

Die Erfindung ist nicht auf die in den bisherigen Figuren dargestellten Heißformungsverfahren beschränkt. Weitere Heißverarbeitungsprozesse sind das Einbrennen keramischer Farben, beziehungsweise Dekore, sowie Beschichtungsverfahren, bei welchen das Glas auf einer erhöhten Temperatur gehalten wird. Ohne Beschränkung auf spezielle Ausführungsbeispiele ist gemäß einer Ausführungsform der Erfindung dabei vorgesehen, dass das Heißverarbeitungsverfahren zumindest eines der Verfahren Keramisieren des Glaselements 1 zur Herstellung von Glaskeramik, Formen eines Glaselements in Form eines Hohl-, Behälter- oder Rohrglases, thermisches Vorspannen, Einbrennen keramischer Farben, sowie das Beschichten des Glaselements umfasst.

### Bezugszeichenliste

| | |
|---|---|
| Glaselement | 1 |
| Vorrichtung zur Verarbeitung von Glaselementen | 2 |
| Perforationslinie | 3 |
| Strahlformende Optik | 4 |
| Laserstrahl | 5 |
| Ultrakurzpulslaser | 7 |
| Gekühlte Einhausung | 8 |
| filamentförmige Schädigung | 9 |
| Vorrichtung zur Heißverarbeitung von Glaselementen | 11 |
| Einrichtung zum Einfügen einer Perforationslinie | 13 |
| Bewegungseinrichtung | 15 |
| Kühleinrichtung | 17 |
| Kühlfluid-Strahl | 18 |
| Düse | 20 |
| Position mit Temperatur T_{g} | 21 |
| Ziehrolle | 25 |
| Spindel | 26 |
| Floatvorrichtung | 28 |
| Schmelzwanne | 29 |
| Floatwanne | 31 |
| Zinnbad | 33 |
| Kühlofen | 35 |
| Trenneinrichtung | 37 |
| Transportrolle | 39 |
| Linse | 40 |
| Dorn | 42 |
| Kanal | 44 |
| Glasband | 100 |
| Glasscheibe | 101 |
| Borte | 102 |
| Glasrohr | 103 |
| Flächen von 1 | 105, 106 |
| Heißformgebungs-Vorrichtung | 110 |
| Glasschmelze | 111 |
| Bearbeitungskopf | 130 |
| Kanal | 131 |
| Achse | 151 |
| Motor | 152 |

## Patentansprüche

1. Verfahren zur Verarbeitung von Glaselementen (1), bei welchem in ein Glaselement (1) während oder nach einem Heißverarbeitungsprozess bei einer erhöhten Temperatur von mindestens 100 °C eine Perforationslinie (3) zum Auftrennen des Glaselements (1) eingefügt wird, indem entlang des vorbestimmten Verlaufs der Perforationslinie (3) mit einem gepulsten Laserstrahl (5) eines Ultrakurzpulslasers (7) voneinander beabstandet filamentförmige Schädigungen (9) in das Glaselement (1) eingefügt werden, **dadurch gekennzeichnet, dass** während dem Einfügen der filamentförmigen Schädigungen (9) das Glaselement (1) mit einem Kühlfluid so abgekühlt wird, dass ein Temperaturgradient entsteht, welcher an den filamentförmigen Schädigungen (9) eine mechanische Spannung induziert, wodurch die zum Auftrennen des Glaselements (1) entlang der Perforationslinie (3) erforderliche Bruchkraft reduziert wird.

2. Verfahren gemäß dem vorstehenden Anspruch, **dadurch gekennzeichnet, dass** der Heißverarbeitungsprozess eine Heißformgebung, insbesondere das Formen des Glaselements (1) aus einer Glasschmelze (111) umfasst.

3. Verfahren gemäß dem vorstehenden Anspruch, **dadurch gekennzeichnet, dass** das Heißformen das Herstellen eines Glasbands, vorzugsweise mit einer Dicke im Bereich von 0,01 mm bis 20 mm, bevorzugt im Bereich von 0,05 mm bis 10 mm, insbesondere im Bereich von 0,1 mm bis 4 mm, ganz besonders bevorzugt im Bereich von 0,1 mm bis 2 mm umfasst.

4. Verfahren gemäß einem der vorstehenden Ansprüche, **dadurch gekennzeichnet, dass** das Einfügen der Perforationslinie (3) bei einer Temperatur des Glases unterhalb der Temperatur, bei welcher das Glas eine Viskosität von 10⁴ dPa·s hat, vorzugsweise bei einer Temperatur unterhalb des Erweichungspunktes, besonders bevorzugt bei einer Temperatur unterhalb der Glasübergangstemperatur erfolgt.

5. Verfahren gemäß einem der vorstehenden Ansprüche, **dadurch gekennzeichnet, dass** das Abkühlen durch Anblasen mit Luft oder einem Aerosol oder durch Aufspritzen einer Flüssigkeit erfolgt.

6. Verfahren gemäß einem der vorstehenden Ansprüche, **dadurch gekennzeichnet, dass** das Abkühlen das Abschrecken in einer Flüssigkeit umfasst.

7. Verfahren gemäß einem der vorstehenden Ansprüche, **dadurch gekennzeichnet, dass** das Glaselement (1) mit einer Kühlrate von mindestens 50 °C pro Sekunde, vorzugsweise von mindestens 100 °C pro Sekunde abgekühlt wird.

8. Verfahren gemäß einem der vorstehenden Ansprüche, **dadurch gekennzeichnet, dass** die Kühlung so durchgeführt wird, dass zu mindestens einem Zeitpunkt am Ort der filamentförmigen Schädigungen (9) ein Temperaturgradient von mindestens 50 °C pro Millimeter aufgebaut wird.

9. Verfahren gemäß einem der vorstehenden Ansprüche, **dadurch gekennzeichnet, dass** die Perforationslinie (3) an einer Position auf dem Glaselement (1) eingefügt wird, bei welcher zumindest eine der folgenden Bedingungen gilt:
- die Temperatur liegt zwischen 100 °C und 400 °C,
- die Temperatur ist gleich dem unteren Kühlpunkt des Glases oder niedriger.

10. Verfahren gemäß einem der vorstehenden Ansprüche, **dadurch gekennzeichnet, dass** das Heißverarbeitungsverfahren zumindest eines der Verfahren
- Keramisieren des Glaseslements (1) zur Herstellung von Glaskeramik,
- Formen eines Glaselements in Form eines Hohl-, Behälter- oder Rohrglases,
- thermisches Vorspannen,
- Einbrennen keramischer Farben,
- Beschichten des Glaselements (1) umfasst

11. Vorrichtung (2) zur Verarbeitung von Glaselementen (1), umfassend
- eine Vorrichtung (11) zur Heißverarbeitung der Glaselemente (1), sowie
- eine Einrichtung (13) zum Einfügen einer Perforationslinie (3) in das Glaselement (1), um das Glaselement (1) entlang der Perforationslinie (3) aufzutrennen, wobei die Einrichtung (13) zum Einfügen einer Perforationslinie (3)
- einen Ultrakurzpulslaser (7) umfasst, welcher so angeordnet und ausgerichtet ist, dass dieser in einem Bereich der Vorrichtung (2) zur Verarbeitung von Glaselementen (1) auf ein Glaselement (1) einstrahlt, in welchem das Glaselement (1) von der Erwärmung bei der Bearbeitung in der Vorrichtung (11) zur Heißverarbeitung der Glaselemente noch eine Temperatur von mindestens 100 °C aufweist, und wobei
- eine Bewegungseinrichtung (15) vorgesehen ist, um den Auftreffpunkt des Laserstrahls (7) entlang eines vorgesehenen Verlaufs der Perforationslinie (3) zu bewegen,
wobei der Ultrakurzpulslaser (7) eingerichtet ist, filamentförmige Schädigungen (9) in das Glaselement (1) einzufügen,
und wobei die Vorrichtung (2) zur Verarbeitung von Glaselementen (1)
- eine Kühleinrichtung (17) umfasst, wobei die Kühleinrichtung (17) eine Düse (20) zur Abgabe eines Kühlfluid-Strahls (18) oder eine Einrichtung zum Abschrecken des Glaselements in einer Flüssigkeit umfasst, welche so angeordnet und ausgebildet ist, dass diese das Glaselement (1) während dem Einfügen der filamentförmigen Schädigungen (9) das Glaselement (1) so abkühlt, dass ein Temperaturgradient entsteht, welcher an den filamentförmigen Schädigungen (9) eine mechanische Spannung induziert, so dass die zum Auftrennen des Glaselements (1) entlang der Perforationslinie (3) erforderliche Bruchkraft reduziert wird.

12. Vorrichtung (2) gemäß dem vorstehenden Anspruch, **dadurch gekennzeichnet, dass** die Vorrichtung (11) zur Heißverarbeitung der Glaselemente (1) eine Heißformgebungs-Vorrichtung (110), insbesondere zur Formung von Glaselementen (1) aus einer Glasschmelze (111) umfasst.

13. Vorrichtung (2) gemäß dem vorstehenden Anspruch, **dadurch gekennzeichnet, dass** die Heißverarbeitungsvorrichtung (11) eine Heißformgebungs-Vorrichtung (110) zum Ziehen eines Glaselements (1) in Form eines langgestreckten Glasbands (100) umfasst, wobei die Einrichtung (13) zum Einfügen einer Perforationslinie (3) dazu eingerichtet ist, Perforationslinien in Längsrichtung des Glasbands (100) einzufügen, an welchen streifenförmige Randbereiche, die jeweils eine verdickte Borten (102) aufweisen, abtrennbar sind.

14. Vorrichtung (2) gemäß einem der Ansprüche 12 oder 13, **dadurch gekennzeichnet, dass** die Heißformgebungs-Vorrichtung (110) eine Vorrichtung zum Herstellen eines Glasbands (100) mit dem Down- oder Up-Draw-Verfahren, dem Overflow-Fusion-Verfahren, dem Redraw-Verfahren oder dem Floatverfahren, oder eine Vorrichtung zur Herstellung von Glasrohren, insbesondere nach dem Danner-Verfahren oder dem Vello-Verfahren, umfasst.

15. Vorrichtung (2) gemäß einem der vorstehenden Ansprüche 11 bis 14, **dadurch gekennzeichnet, dass** die Einrichtung (13) zum Einfügen der Perforationslinie (3) einen Bearbeitungskopf (130) umfasst, durch welchen sowohl der Laserstrahl (5), als auch der Kühlfluid-Strahl (18) auf das Glaselement (1) gerichtet werden, so dass der Auftreffpunkt des Laserstrahls (5) auf dem Glaselement (1) im Kühlstrahl (18) liegt.

16. Vorrichtung (2) gemäß einem der vorstehenden Ansprüche 11 bis 15, bei welcher die Kühleinrichtung (17) so angeordnet ist, dass ein Kühlfluid-Strahl (18) auf eine Fläche des Glaselements (1) gerichtet ist, welche der Fläche gegenüberliegt, auf welcher der Laserstrahl (5) auftrifft.

## Claims

1. A method for processing glass elements (1), which comprises introducing, into a glass element (1), a perforation line (3) during or after a hot processing process at an elevated temperature of at least 100 °C, for separating said glass element (1), by introducing, into the glass element (1), filament-like defects (9) which are spaced apart from one another along the predetermined course of the perforation line (3) using a pulsed laser beam (5) from an ultrashort pulse laser (7),
**characterised in that** during the introduction of the filament-like defects (9), the glass element (1) is cooled with a cooling fluid in such a way that a temperature gradient is created which induces a mechanical stress at the filament-like defects (9), thereby reducing the breaking force required to separate the glass element (1) along said perforation line (3).

2. The method according to the preceding claim, **characterised in that** the hot processing process comprises hot forming, in particular the forming of the glass element (1) from a glass melt (111).

3. The method according to the preceding claim, **characterised in that** the hot forming comprises the production of a glass ribbon which preferably has a thickness in the range from 0.01 mm to 20 mm, preferably in the range from 0.05 mm to 10 mm, more particularly in the range from 0.1 mm to 4 mm, most preferably in the range from 0.1 mm to 2 mm.

4. The method according to any one of the preceding claims, **characterised in that** the introduction of the perforation line (3) is performed at a temperature of the glass below the temperature at which the glass has a viscosity of 10⁴ dPa·s, preferably at a temperature below the softening point, most preferably at a temperature below the glass transition temperature.

5. The method according to any one of the preceding claims, **characterised in that** the cooling is performed by blowing air or an aerosol thereon or by spraying a liquid thereon.

6. The method according to any one of the preceding claims, **characterised in that** the cooling comprises quenching in a liquid.

7. The method according to any one of the preceding claims, **characterised in that** the glass element (1) is cooled at a cooling rate of at least 50 °C per second, preferably at least 100 °C per second.

8. The method according to any one of the preceding claims, **characterised in that** the cooling is performed in such a way that, at least at one point in time, a temperature gradient of at least 50 °C per millimetre is built up at the location of the filament-like defects (9).

9. The method according to any one of the preceding claims, **characterised in that** the perforation line (3) is introduced into the glass element (1) at a location at which at least one of the following conditions applies:
- the temperature is between 100 °C and 400 °C;
- the temperature is equal to or lower than the strain point of the glass.

10. The method according to any one of the preceding claims, **characterised in that** the hot processing process comprises at least one of the following processes:
- ceramizing the glass element (1) to produce glass ceramics;
- forming a glass element into the form of a hollow glass, glass container or glass tubing;
- thermal toughening;
- firing ceramic inks;
- coating the glass element (1).

11. An apparatus (2) for processing glass elements (1), comprising
- a device (11) for hot processing the glass elements (1); and
- a device (13) for introducing a perforation line (3) into the glass element (1) for separating the glass element (1) along said perforation line (3), wherein said device (13) for introducing a perforation line (3) comprises
- an ultrashort pulse laser (7) which is arranged and aligned so as to irradiate a glass element (1) within a region of the apparatus (2) for processing glass elements (1) where the glass element (1) is still at a temperature of at least 100 °C from the heating during the processing in said device (11) for hot processing the glass elements; and wherein
- a motion device (15) is provided for moving the point of incidence of the laser beam (7) along a predetermined course of the perforation line (3);
wherein the ultrashort pulse laser (7) is adapted to introduce filament-like defects (9) into the glass element (1);
and wherein the apparatus (2) for processing glass elements (1) comprises
- a cooling device (17), said cooling device (17) comprising a nozzle (20) for emitting a cooling fluid jet (18) or a means for quenching the glass element in a liquid, which is arranged and configured so as to cool the glass element (1) during the introduction of the filament-like defects (9) into the glass element (1) in such a way that a temperature gradient is created which induces a mechanical stress at the filament-like defects (9) such that a breaking force required to separate the glass element (1) along the perforation line (3) is reduced.

12. The apparatus (2) according to the preceding claim, **characterised in that** the device (11) for hot processing the glass elements (1) comprises a hot forming device (110), in particular for forming glass elements (1) from a glass melt (111).

13. The apparatus (2) according to the preceding claim, **characterised in that** the hot processing device (11) comprises a hot forming device (110) for drawing a glass element (1) in the form of an elongated glass ribbon (100), wherein the device (13) for introducing a perforation line (3) is adapted for introducing perforation lines longitudinally of the glass ribbon (100), along which strip-shaped edge portions, each having a thickened border (102), can be separated.

14. The apparatus (2) according to any one of claims 12 or 13, **characterised in that** the hot forming device (110) comprises a device for producing a glass ribbon (100) using a down-draw or up-draw process, an overflow fusion process, a redraw process or a float process; or a device for producing glass tubes, in particular by using Danner process or Vello process.

15. The apparatus (2) according to any one of the preceding claims 11 to 14, **characterised in that** the device (13) for introducing the perforation line (3) comprises a processing head (130) which directs both the laser beam (5) and the cooling fluid jet (18) onto the glass element (1), such that the point of incidence of the laser beam (5) on the glass element (1) lies within the cooling jet (18).

16. The apparatus (2) according to any one of the preceding claims 11 to 15, wherein the cooling device (17) is arranged such that a cooling fluid jet (18) is directed onto a surface of the glass element (1) which is opposite the surface on which the laser beam (5) is incident.

## Revendications

1. Procédé de traitement d'éléments (1) en verre, dans lequel on ménage dans un élément (1) en verre, pendant ou après un processus avec traitement thermique à haute température, d'au moins 100 °C, une ligne de perforations (3) servant à rompre l'élément (1) en verre, en pratiquant dans l'élément (1) en verre, le long d'un parcours prédéterminé de la ligne de perforations (3), à l'aide du faisceau laser pulsé (5) d'un laser (7) à impulsions ultracourtes, des piqûres (9) en forme de filaments, espacées les unes des autres, **caractérisé en ce que**, pendant qu'on pratique ces piqûres (9) en forme de filaments, on refroidit l'élément (1) en verre à l'aide d'un fluide réfrigérant, de sorte qu'il se forme un gradient de température qui induit une tension mécanique au niveau des piqûres (9) en forme de filaments, grâce à quoi la force de rupture nécessaire pour rompre l'élément (1) en verre le long de la ligne de perforations (3) est réduite.

2. Procédé conforme à la revendication précédente, **caractérisé en ce que** le processus avec traitement thermique comprend un formage à chaud, en particulier le façonnage de l'élément (1) en verre à partir d'une masse de verre fondu (111).

3. Procédé conforme à la revendication précédente, **caractérisé en ce que** le formage à chaud comprend la préparation d'une bande de verre qui présente une épaisseur située de préférence dans l'intervalle allant de 0,01 mm à 20 mm, mieux encore dans l'intervalle allant de 0,05 mm à 10 mm, en particulier dans l'intervalle allant de 0,1 mm à 4 mm, et de manière tout particulièrement préférée, dans l'intervalle allant de 0,1 mm à 2 mm.

4. Procédé conforme à l'une des revendications précédentes, **caractérisé en ce que** la ligne de perforations (3) est ménagée alors que le verre se trouve à une température inférieure à la température à laquelle le verre présente une viscosité de 10⁴ dPa.s, de préférence à une température inférieure à son point de ramollissement, et mieux encore à une température inférieure à sa température de transition vitreuse.

5. Procédé conforme à l'une des revendications précédentes, **caractérisé en ce que** le refroidissement est réalisé par soufflage d'air ou par projection d'un aérosol ou d'un liquide pulvérisé.

6. Procédé conforme à l'une des revendications précédentes, **caractérisé en ce que** le refroidissement comprend une trempe dans un liquide.

7. Procédé conforme à l'une des revendications précédentes, **caractérisé en ce que** l'élément (1) en verre est refroidi à une vitesse de refroidissement d'au moins 50 °C par seconde, et de préférence d'au moins 100 °C par seconde.

8. Procédé conforme à l'une des revendications précédentes, **caractérisé en ce que** le refroidissement est réalisé de telle manière que, au moins à un certain moment, un gradient de température d'au moins 50 °C par millimètre s'établit à l'endroit où se trouvent les piqûres (9) en forme de filaments.

9. Procédé conforme à l'une des revendications précédentes, **caractérisé en ce que** la ligne de perforations (3) est ménagée, sur l'élément (1) en verre, en une position en laquelle au moins l'une des conditions suivantes est réalisée :
- la température se situe entre 100 °C et 400 °C,
- la température est égale ou inférieure à la température inférieure de recuit du verre.

10. Procédé conforme à l'une des revendications précédentes, **caractérisé en ce que** le processus avec traitement thermique comprend au moins l'un des procédés suivants :
- céramisation de l'élément (1) en verre, pour la fabrication de vitrocéramique,
- façonnage d'un élément en verre en forme de verre creux, de verre pour contenants ou de verre à tubes,
- précontrainte thermique,
- cuisson de couleurs céramiques,
- revêtement de l'élément (1) en verre.

11. Appareillage (2) pour traitement d'éléments (1) en verre, qui comprend :
- un dispositif (11) servant au traitement thermique de l'élément (1) en verre,
- et un dispositif (13) servant à ménager une ligne de perforations (3) dans l'élément (1) en verre, afin de pouvoir rompre l'élément (1) en verre le long de la ligne de perforations (3), lequel dispositif (13) servant à ménager une ligne de perforations (3) comprend
- un laser (7) à impulsions ultra-courtes, qui est disposé et aligné de telle sorte que celui-ci irradie un élément (1) en verre dans une zone de l'appareillage (2) pour traitement d'éléments (1) en verre dans laquelle l'élément (1) en verre, en raison du chauffage subi lors du traitement dans le dispositif (11) de traitement thermique d'éléments en verre, se trouve encore à une température d'au moins 100 °C,
et dans lequel est prévu
- un dispositif de déplacement (15), afin de déplacer le point d'impact du rayon laser (7) le long d'un parcours prédéterminé de la ligne de perforations (3),
étant entendu que le laser (7) à impulsions ultracourtes est arrangé pour pratiquer des piqûres (9) en forme de filaments dans l'élément (1) en verre,
et lequel appareillage (2) pour traitement d'éléments (1) en verre comprend :
- un dispositif de refroidissement (17), lequel dispositif de refroidissement (17) comprend une tuyère (20) servant à envoyer un jet (18) de fluide réfrigérant ou un dispositif servant à tremper l'élément en verre dans un liquide, et est constitué et disposé de telle sorte que, pendant que sont pratiquées les piqûres (9) en forme de filaments,
il refroidit l'élément (1) en verre de telle manière qu'il se forme un gradient de température qui induit une tension mécanique au niveau des piqûres (9) en forme de filaments, de telle sorte que la force de rupture nécessaire pour rompre l'élément (1) en verre le long de la ligne de perforations (3) est réduite.

12. Appareillage (2) conforme à la revendication précédente, **caractérisé en ce que** le dispositif (11) servant au traitement thermique de l'élément (1) en verre comprend un dispositif de mise en forme à chaud (110), en particulier pour façonner des éléments (1) en verre à partir d'une masse de verre fondu (111).

13. Appareillage (2) conforme à la revendication précédente, **caractérisé en ce que** le dispositif (11) de traitement thermique comprend un dispositif de mise en forme à chaud (110) servant à tirer un élément (1) en verre sous forme d'une bande de verre (100) étirée en long, étant entendu que le dispositif (13) servant à pratiquer une ligne de perforations (3) est arrangé pour pratiquer, dans le sens de la longueur de la bande de verre (100), des lignes de perforations au niveau desquelles des zones latérales en forme de filet qui présentent de place en place une bordure épaissie (102) peuvent être séparées.

14. Appareillage (2) conforme à la revendication 12 ou 13, **caractérisé en ce que** le dispositif (110) de mise en forme à chaud comprend un dispositif de fabrication d'une bande de verre (100) selon le procédé d'étirage par le haut ou par le bas, le procédé de fusion-écoulement, le procédé de réétirage, ou le procédé de flottage, ou un dispositif de fabrication de tubes de verre, en particulier selon le procédé Danner ou le procédé Vello.

15. Appareillage (2) conforme à l'une des revendications 11 à 14, **caractérisé en ce que** le dispositif (13) servant à pratiquer une ligne de perforations (3) comprend une tête de travail (130) à travers laquelle sont dirigés sur l'élément (1) en verre aussi bien le faisceau laser (5) que le jet (18) de fluide réfrigérant, de sorte que le point d'impact du faisceau laser (5) sur l'élément (1) en verre se trouve dans le jet réfrigérant (18).

16. Appareillage (2) conforme à l'une des revendications 11 à 15, dans lequel le dispositif de refroidissement (17) est disposé de telle sorte qu'un jet (18) de fluide réfrigérant est dirigé sur une surface de l'élément (1) en verre qui est située en face de la surface sur laquelle vient frapper le faisceau laser (5).
